# EUROPÄISCHE PATENTSCHRIFT

(11) **EP 0 483 590 B1**
(45) Veröffentlichungstag und Bekanntmachung des Hinweises auf die Patenterteilung: **12.10.1994**
(21) Anmeldenummer: 91117556.0
(22) Anmeldetag: 15.10.1991
(51) Int. Cl.: A24F 19/06, B60N 3/08

(54) **Ascher, Ablagefach od.dgl. Behältnis, insbesondere für Fahrzeuge**
Ashtray, glove compartment or similar receptacle particularly for vehicles
Cendrier, boîte à gants, ou réceptacle similaire, en particulier pour véhicules

(30) Priorität: 30.10.1990 DE 4038324
(43) Veröffentlichungstag der Anmeldung: 06.05.1992
(73) Patentinhaber: Gebr. Happich GmbH, D-42097 Wuppertal (DE)
(72) Erfinder: Dabringhaus, Volker, W-5600 Wuppertal 1 (DE); Wegel, Peter, W-5600 Wuppertal 2 (DE)

(56) Entgegenhaltungen:
- DE-U- 8 132 467
- DE-U- 8 606 430
- FR-A- 2 003 709
- US-A- 4 712 845

## Beschreibung

Die Erfindung bezieht sich auf einen Ascher, ein Ablagefach od. dgl. Behältnis, insbesondere für Fahrzeuge, mit einem Gehäuse und einem in Öffnungsrichtung federbelasteten Gehäuseeinsatz sowie mit einer lösbaren Rasteinrichtung, um den Gehäuseeinsatz in der Schließstellung im Gehäuse zu halten, wobei die Rasteinrichtung, die durch Einwirkung auf die Frontplatte des Gehäuseeinsatzes betätigbar ist, eine herzförmige, als Kulissennut ausgebildete Steuerkurve am Gehäuseeinsatz aufweist, an der ein an einem gehäuseseitigen, gegen Überwindung einer gewissen Reibungskraft verschwenkbaren Gelenkhebel angeordneter Bolzen einrastbar anliegt.

Ascher der vorgenannten Art sind durch offenkundige Vorbenutzungen sowie durch die Druckschrift DE-U-81 32 467 bekanntgeworden und erfreuen sich wegen ihrer leichten und einfachen Bedienbarkeit (Tip-Automatik) einer zunehmenden Beliebtheit. Bei solchen Aschern wird als Rasteinrichtung im allgemeinen ein zweistufiges Richtgesperre verwendet, wie es von einer Kugelschreibermechanik her bekannt ist. Die herkömmliche Rasteinrichtung hat sich im praktischen Gebrauch als nicht immer funktionstüchtig erwiesen, so daß es zu Beanstandungen kam. Dabei mußte festgestellt werden, daß der Gehäuseeinsatz oftmals nicht in der Schließstellung im Gehäuse gehalten wurde. Durch Untersuchungen und Funktionsüberprüfungen wurde erkannt, daß der am Gelenkhebel sitzende Bolzen nicht in den richtigen Ast der Steuerkurve einläuft, wenn der Gelenkhebel nicht exakt in der vorgegebenen Position verharrt. Die Druckschrift DE-U-81 32 467 enthält zwar den Hinweis, daß der Gelenkhebel nur gegen Überwindung einer gewissen Reibungskraft verschwenkbar sein soll, jedoch keinen Hinweis darauf, mit welchen Mitteln dies zu realisieren ist. Versuche, im Lagerbereich des Gelenkhebels Selbsthemmung zu erzeugen oder durch Warzen am Gelenkhebel ein Verklemmen bzw. eine erhöhte Reibung am Gehäuse zu erzielen, führten zu keiner dauerhaften Verbesserung der Funktion.

Bei einem anderen, durch die FR-A- 2 003 709 bekanntgewordenen Ascher wird der an einem Führungshebel angeordnete Bolzen nicht durch selbsthemmende Reibung, sondern durch Federkraft in die richtige Ausgangsposition gebracht.

Der Erfindung liegt nun die Aufgabe zugrunde, bei einem Ascher, Ablagefach od. dgl. Behältnis der eingangs näher geschilderten Art, Vorsorge dafür zu treffen, daß eine dauerhafte Funktionstüchtigkeit der Rasteinrichtung gewährleistet ist.

Der Erfindung zufolge wird diese Aufgabe dadurch gelöst, daß der Gelenkhebel zwecks Erzielung einer eine Selbsthemmung gewährleistenden Reibung einstückig und materialeinheitlich mit einem sich an der ihm benachbarten Wand des Gehäuses abstützenden Federelement ausgebildet ist, das aus einer Federzunge besteht, die sich in einer mit der Längsachse des Gelenkhebels zusammenfallenden Ausnehmung desselben erstreckt und eine an diesem angebundene Wurzel sowie einen am freien Ende angeordneten, aus der Gelenkhebelebene heraustretenden Gleitnocken aufweist.

Durch die erfindungsgemäßen Maßnahmen wird die gestellte Aufgabe in optimaler Weise gelöst. Durch das erfindungsgemäß vorgesehene Federelement wird zum einen eine Selbsthemmung des Gelenkhebels erzielt, wodurch sichergestellt ist, daß dieser die vorgegebene Lageposition exakt einhält und zum anderen wird ein weiches Gleiten des Gelenkhebels erreicht, wenn der daran sitzende Bolzen die Steuerkurve durchläuft. Damit erfüllt die Erfindung gleich zwei sich dem Grunde nach widersprechende Forderungen, nämlich Selbsthemmung einerseits und weiches Gleiten andererseits, in überraschender Zufriedenstellung. Das Federelement wirkt darüber hinaus auch toleranzausgleichend und ist, da es einstückig und materialeinheitlich mit dem Gelenkhebel ausgebildet ist, völlig kostanneutral herzustellen, zumal der Gelenkhebel mit Federelement bzw. Federzunge als Kunststoff-Spritzgußteil ausgebildet ist. Wie Versuche gezeigt haben, ist die Dauer der Funktionstüchtigkeit praktisch unbegrenzt, wobei das Verharrungsvermögen und die Leichtgängigkeit des Gelenkhebels auch auf Dauer unverändert bleiben.

Ein Ausführungsbeispiel der Erfindung wird im folgenden anhand der Zeichnung näher erläutert. Es zeigen:
- Fig. 1: den vertikalen Schnitt durch einen Fahrzeugascher,
- Fig. 2: die Rasteinrichtung des Aschers nach Fig. 1 und
- Fig. 3: einen Schnitt III - III nach Fig. 2.

Es wird darauf hingewiesen, daß neben dem dargestellten Fahrzeugascher auch andere Behältnisse, wie Ablagefächer, Münzboxen, Handschuhfächer und dergleichen vorgesehen werden können.

Der dargestellte Ascher ist als Kippascher ausgeführt, der aber auch als Schubladenascher ausgeführt werden kann. Der Ascher besteht aus einem Gehäuse 1 mit einem darin um eine Schwenkachse 2 beweglich gelagerten Gehäuseeinsatz 3, der mit einer Frontplatte 4 und mit einem Ascheaufnahmebehälter 5 ausgerüstet ist. Gegen den Gehäuseeinsatz 3 wirkt eine Öffnungsfeder 6.

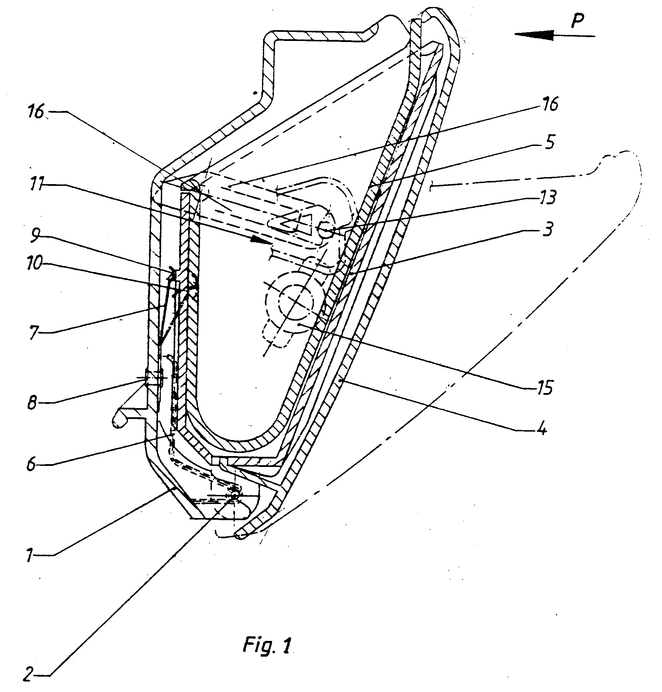

An einer Gehäusewand ist eine Zusatzfeder 7 angeordnet und mit einem Niet 8 befestigt. Die Zusatzfeder 7 greift mit einem Federarm 9 an der Rückwand 10 des Gehäuseeinsatzes 3 an. Mit ausgezogenen Linien ist in Fig. 1 die Nichtgebrauchsstellung des Aschers dargestellt, während mit strichpunktierten Linien die Gebrauchsstellung desselben angedeutet ist. Ebenso ist mit ausgezogenen Linien die gespannte Arbeitsstellung und mit strichpunktierten Linien die entspannte Ruhestellung der Zusatzfeder 7 dargestellt.

Will man den Gehäuseeinsatz 3 in die Gebrauchsstellung überführen, so drückt man denselben geringfügig in das Gehäuse (vgl. Richtungspfeil P) ein, wodurch ein Lösen der Rasteinrichtung 11 bewirkt wird, wonach der Gehäuseeinsatz 3 durch die Öffnungsfeder 6 in einer dem Eindrücken entgegengesetzten Richtung in die Gebrauchsstellung bewegt wird. Als Rasteinrichtung 11 wird ein,an einer Seitenwand des Gehäuseeinsatzes 3 angeordnetes Richtgesperre verwendet ist. Die Rasteinrichtung 11 zeigt einen, in der herzförmigen Kulissenführung 12 derselben gleitbeweglich geführten Bolzen 13, und zwar in seiner Verriegelungsposition, in der er sich in einer muldenförmigen Ausformung 14 der Rasteinrichtung 11 befindet. Der Bolzen 13, der an einem am Gehäuse 1 gelagerten Gelenkhebel 16 sitzt, wird zum einen durch die Öffnungsfeder 6 und zum anderen durch die Zusatzfeder 7 in die Ausformung 14 der Rasteinrichtung 11 hinein gezwungen, so daß das geringfügige Eindrücken des Gehäuseeinsatzes 3 in das Gehäuse 1 gegen die Kraft der genannten beiden Federn 6 und 7 erfolgen muß.

Nach dem Andrücken des Gehäuseeinsatzes 3 gleitet der Bolzen 13 aus der Ausformung 14 heraus und in den unteren Ast 17 der Kulissenführung 12 ein, wobei gleichzeitig durch die Kraft der Öffnungsfeder 6 ein Öffnen des Gehäuseeinsatzes 3 erfolgt. Damit der Gehäuseeinsatz 3 geschlossen und in der geschlossenen Stellung durch die Rasteinrichtung 11 auch gehalten werden kann, ist es zwingend erforderlich, daß der Bolzen 13 des Gelenkhebels 16 in den oberen Ast 18 der Kulissenführung 12 einfährt, weil er andernfalls nicht in die Ausformung 14 einfallen kann. Das Auffinden des richtigen Weges für den Bolzen 13 ist durch die Steuerkurve (Kulissenführung 12) und die durch die Steuerkurve bewirkte Lage des Gelenkhebels 16 vorgegeben. Die für den Gelenkhebel 16 vorgegebene Lage darf sich im geöffneten Zustand des Gehäuseeinsatzes 3 nicht ändern, weil anderenfalls der Bolzen 13 in den falschen Ast der Kulissenführung 12 einläuft mit der Folge, daß der Gehäuseeinsatz 3 nicht in der Schließstellung gehalten werden kann.

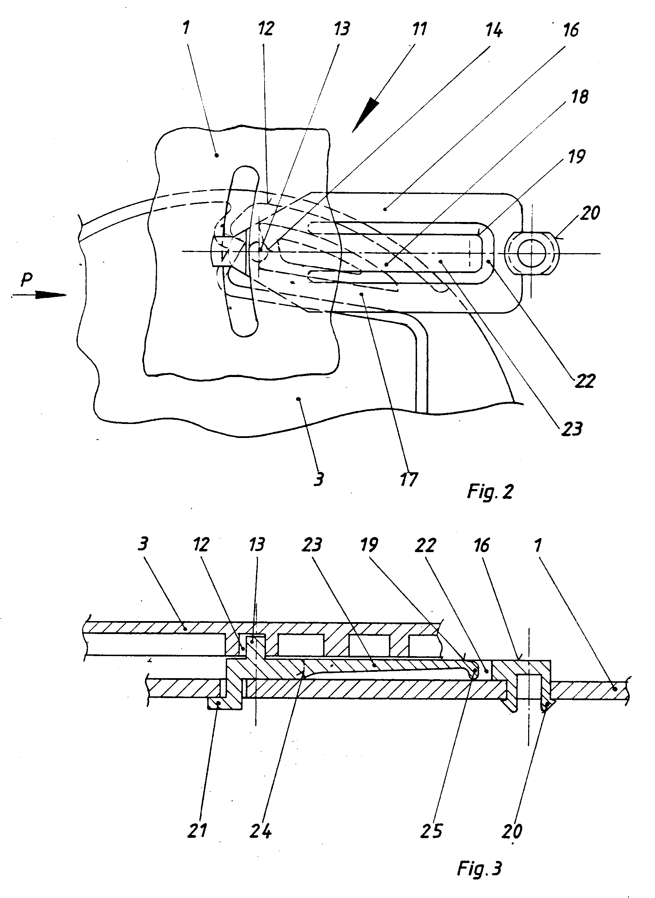

Um also sicherzustellen, daß der Gelenkhebel 16 in der vorgegebenen Lage verharrt, und zwar auch bei starken Fahrzeugerschütterungen, ist dieser mit einem Federelement 19 ausgerüstet, das sich an der ihm benachbarten Gehäusewand abstützt (vgl. Fig. 3).

Der Gelenknebel 16 besteht aus einem länglichen, relativ dünnen Kunststoffplättchen, das an seinem einen Ende einen angeformten, als Klips ausgebildeten Lagerzapfen 20, an seinem anderen Ende eine angeformte Führungszunge 21 und der Führungszunge 21 gegenüberliegend den angeformten Bolzen 13 aufweist. Durch eine U-förmige Ausnehmung 22 ist eine Federzunge 23 gebildet, deren Wurzel 24 der Führungszunge 21 und dem Bolzen 13 benachbart ist. Die Federzunge 23 verjüngt sich von der Wurzel 24 zum freien Ende hin und sie weist am freien Ende einen sich am Gehäuse 1 abstützenden Gleitnocken 25 (Druckwarze) auf. Die Federzunge 23 besitzt eine weiche Federkennlinie und vermag daher leichtgängig über die Gehäusewandung zu gleiten. Andererseits bleibt der Gelenkhebel 16 in jeder Position selbsthemmend stehen, zumal der Federdruck nahe am Lagerzapfen 20 angreift.

## Patentansprüche

1. Ascher, Ablagefach od. dgl. Behältnis, insbesondere für Fahrzeuge, mit einem Gehäuse (1) und einem in Öffnungsrichtung federbelasteten Gehäuseeinsatz (3) sowie mit einer lösbaren Rasteinrichtung (11), um den Gehäuseeinsatz (3) in der Schließstellung im Gehäuse (1) zu halten, wobei die Rasteinrichtung (11), die durch Einwirkung auf die Frontplatte (4) des Gehäuseeinsatzes (3) betätigbar ist, eine herzförmige, als Kulissennut (12) ausgebildete Steuerkurve am Gehäuseeinsatz (3) aufweist, an der ein an einem gehäuseseitigen, gegen Überwindung einer gewissen Reibungskraft verschwenkbaren Gelenkhebel (16) angeordneter Bolzen (13) einrastbar anliegt, dadurch gekennzeichnet, daß der Gelenkhebel (16) zwecks Erzielung einer eine Selbsthemmung gewährleistenden Reibung einstückig und materialeinheitlich mit einem sich an der ihm benachbarten Wand des Gehäuses (1) abstützenden Federelement (19) ausgebildet ist, das aus einer Federzunge (23) besteht, die sich in einer mit der Längsachse des Gelenkhebels (16) zusammenfallenden Ausnehmung (22) desselben erstreckt und eine an diesem angebundene Wurzel (24) sowie einen am freien Ende angeordneten, aus der Gelenkhebelebene heraustretenden Gleitnocken (25) aufweist.

2. Ascher nach Anspruch 1, dadurch gekennzeichent, daß sich die Wurzel (24) der Federzunge (16) an deren dem Drehpunkt (20) des Gelenkhebels (16) abgewandten bzw. dem in die Steuerkurve (12) eingreifenden Bolzen (13) eng benachbarten Ende befindet.

## Claims

1. Ashtray, storage tray or similar receptacle, in particular for vehicles, having a housing (1) and a housing insert (3), which is spring-loaded in the direction of opening, and having a detachable latching mechanism (11) for holding the housing insert (3) in the closed position in the housing (1), the latching mechanism (11), which can be actuated by action upon the front plate (4) of the housing insert (3), exhibiting a heart-shaped control cam, configured as a link groove (12), on the housing insert (3), which control cam is borne against, in an engageable manner, by a bolt (13) disposed on an articulated lever (16), the said articulated lever being disposed on the housing side and being pivotable against the surmounting of a certain friction force, characterized in that the articulated lever (16), for the purpose of obtaining a friction guaranteeing automatic locking, is configured in one piece and in material integration with a spring element (19), which spring element is supported against the wall of the housing (1) adjacent to it and comprises a spring tongue (23), which extends in a recess (22) in the articulated lever, the said recess coinciding with the longitudinal axis of the articulated lever (16), and exhibits a root (24), which is bound to the articulated lever, and a sliding cam (25), which is disposed at the free end and emerges from the plane of the articulated lever.

2. Ashtray according to Claim 1, characterized in that the root (24) of the spring tongue (16) is located at that end of the spring tongue facing away from the pivot point (20) of the articulated lever (16) or closely adjacent to the bolt (13) engaging in the control cam (12).

## Revendications

1. Cendrier, vide-poches ou récipient similaire, en particulier pour véhicule automobile, comportant un boîtier (1) et une garniture de boîtier (3) soumise à l'action d'un ressort dans le sens d'ouverture ainsi qu'un dispositif d'encliquetage (11) amovible, afin de maintenir la garniture (3) dans le boîtier (1), en position fermée, le dispositif d'encliquetage (11), qui peut être actionné par action sur la plaque frontale (4) de la garniture (3), présentant sur la garniture (3) une came de commande, en forme de coeur, conçue à la manière d'une rainure de coulisse (12), contre laquelle s'applique de manière à s'accrocher un téton (13) placé sur un levier d'articulation (16) côté boîtier, pouvant pivoter à l'encontre d'une certaine force de friction, caractérisé en ce que le levier d'articulation (16) est réalisé, pour obtenir une friction garantissant un autoblocage, d'une seule pièce et dans la même matière qu'un élément à ressort (19) prenant appui contre la paroi qui lui est voisine du boîtier (1), lequel élément à ressort est constitué d'une languette (23) qui s'étend dans un évidement (22) du levier d'articulation (16), coïncidant avec l'axe longitudinal de celui-ci et présente une racine (24) attachée à celui-ci ainsi qu'une came de glissement (25) placée à l'extrémité libre, ressortant du plan du levier d'articulation.

2. Cendrier selon la revendication 1, caractérisé en ce que la racine (24) de la languette formant ressort (16) se trouve à son extrémité tournée à l'opposé du point de rotation (20) du levier d'articulation (16) ou à l'extrémité étroitement voisine du téton (13) s' engageant dans la came de commande (12).
